# EUROPEAN PATENT APPLICATION

(11) **EP 4 529 274 A1**
(43) Date of publication of application: **26.03.2025**
(21) Application number: 24744145.4
(22) Date of filing: 11.01.2024
(51) Int. Cl.: H04W 36/20

(54) **CELLULAR-NETWORK COMMUNICATION METHOD, AND RELATED APPARATUS**

(30) Priority: 20.01.2023 CN 202310101324
(71) Applicant: Honor Device Co., Ltd., Shenzhen, Guangdong 518040 (CN)
(72) Inventor: LI, Hongyu, Shenzhen, Guangdong 518040 (CN)
(74) Representative: Isarpatent
(86) International application number: PCT/CN2024/071713
(87) International publication number: WO 2024/152969

(57) **Abstract**

Embodiments of this application provide a cellular network communication method and a related apparatus. The method includes: An electronic device accesses a cellular network and a wireless fidelity WIFI network; obtains a first frequency band corresponding to the cellular network and a second frequency band corresponding to the WIFI network; transmits an adjustment message to a base station when the first frequency band and the second frequency band meet a first preset condition and the electronic device is in a connected state, where the adjustment message indicates to adjust a frequency band corresponding to the cellular network, and the first preset condition is a condition indicating that interference exists between the cellular network and the WIFI network; receives, from the base station, information indicating a third frequency band; and changes to a cellular network in the third frequency band; or changes to a cellular network in a fourth frequency band when the first frequency band and the second frequency band meet the first preset condition and the electronic device is in an idle state. In this way, by adjusting a frequency band corresponding to the cellular network, mutual interference in a coexistence scenario of the cellular network and the WIFI network is reduced.

## Description

This application claims priority to Chinese Patent Application No. 202310101324.3, filed with China National Intellectual Property Administration on January 20, 2023 and entitled "CELLULAR NETWORK COMMUNICATION METHOD AND RELATED APPARATUS", which is incorporated herein by reference in its entirety.

### TECHNICAL FIELD

This application relates to the field of terminal technologies, and in particular, to a cellular network communication method and a related apparatus.

### BACKGROUND

With the development of communication technologies, functions of an electronic device gradually increase. For example, the electronic device may transmit and receive information through a cellular network, thereby making a call, receiving a call, displaying real-time weather, browsing a web page, watching a video, and the like. The electronic device may further provide a hotspot service and the like to another electronic device through a wireless fidelity (wireless fidelity, WIFI) network.

However, when the electronic device provides the hotspot service to the another electronic device through the WIFI network, the hotspot service may be stuttered, or when the electronic device uses the cellular network to make a video call while connected to the WIFI network to surf the Internet, problems such as stuttering of the video call and interruption of the call may occur, leading to poor user experience.

### SUMMARY

Embodiments of this application provide a cellular network communication method and a related apparatus, and are applied to the field of terminal technologies. By adjusting a frequency band corresponding to a cellular network, mutual interference in a coexistence scenario of the cellular network and a WIFI network is reduced.

According to a first aspect, embodiments of this application provide a cellular network communication method. The method includes: an electronic device accesses a cellular network and a wireless fidelity WIFI network; the electronic device obtains a first frequency band corresponding to the cellular network and a second frequency band corresponding to the WIFI network; the electronic device transmits an adjustment message to a base station when the first frequency band and the second frequency band meet a first preset condition and the electronic device is in a connected state, where the adjustment message indicates to adjust a frequency band corresponding to the cellular network, and the first preset condition is a condition indicating that interference exists between the cellular network and the WIFI network; the electronic device receives, from the base station, information indicating a third frequency band; and the electronic device changes to a cellular network in the third frequency band; or the electronic device changes to a cellular network in a fourth frequency band when the first frequency band and the second frequency band meet the first preset condition and the electronic device is in an idle state.

The electronic device may change to the cellular network in the third frequency band through handover, redirection, reestablishment, reselection, and the like. This is not limited herein. The electronic device changes to the cellular network in the fourth frequency band, and the cellular network in the fourth frequency band may be reselected for the electronic device.

It should be noted that handover, redirection, reestablishment, and reselection are different network change manners. It may take dozens of milliseconds to change the network through handover, and has little impact on communication of the electronic device; and it may take hundreds of milliseconds to change the network through redirection.

It may be understood that the fourth frequency band may be the same as or may be different from the third frequency band.

In this way, when interference occurs between the cellular network and the WIFI network to which the electronic device is connected, the frequency band of the cellular network may be adjusted to reduce the interference between the cellular network and the WIFI network, and abnormal phenomena such as problems such as stuttering of a phone and network disconnection corresponding to a service corresponding to the cellular network or a service corresponding to the WIFI network are reduced.

Optionally, the first preset condition includes one or more of the following: the first frequency band overlaps with the second frequency band, a multiplied frequency or a beat frequency of the first frequency band is within the second frequency band, or a multiplied frequency or a beat frequency of the second frequency band is in the first frequency band.

Optionally, that the electronic device transmits an adjustment message to a base station when the first frequency band and the second frequency band meet a first preset condition and the electronic device is in a connected state includes: the electronic device obtains an interference frequency band between the first frequency band and the second frequency band when the first frequency band and the second frequency band meet the first preset condition, where the interference frequency band is a frequency band meeting the first preset condition in the first frequency band;
the electronic device performs, when the electronic device is in the connected state and the interference frequency band meets a second preset condition, inter-frequency measurement and/or inter-system measurement, to obtain a measurement result, where the second preset condition includes not being a carrier aggregation secondary component carrier cell frequency band and not being a dual-connectivity secondary cell group frequency band; and
the electronic device transmits a first message to the base station when the measurement result meets a third preset condition, where the first message indicates to change a cell; or the electronic device reduces a communication parameter corresponding to an interference bandwidth when the measurement result does not meet the third preset condition, where the communication parameter is a corresponding parameter when communication quality is measured, and the interference bandwidth is a bandwidth corresponding to the interference frequency band.

The third preset condition includes one or more of the following: an inter-frequency cell and/or an inter-system cell exists in the cellular network; the inter-frequency cell has no interference with the WIFI network, and/or the inter-system cell has no interference with the WIFI network; and a communication parameter corresponding to the inter-frequency cell meets a first threshold condition, and/or a communication parameter corresponding to the inter-system cell meets a second threshold condition, where the first threshold condition is a minimum requirement for communication of the electronic device in a first cellular system, and the second threshold condition is a minimum requirement for communication of the electronic device in a second cellular system.

For the inter-frequency cell and the inter-system cell, refer to the foregoing related descriptions. Details are not described herein again. In this way, the electronic device may change to a neighboring cell in a manner such as handover/redirection, to reduce the interference between the cellular network and the WIFI network. When the neighboring cell does not exist, or interference exists between the neighboring cell and the WIFI network, or the neighboring cell does not meet a communication condition, the communication parameter corresponding to the interference bandwidth is adjusted to reduce a possibility that the base station selects the interference bandwidth for a service and then selects a bandwidth without interference for the service, so that interference impact between the cellular network and the WIFI network is reduced, thereby improving user experience.

Optionally, that the electronic device transmits a first message to the base station when the measurement result meets a third preset condition includes: the electronic device obtains a related message about a fifth frequency band corresponding to the inter-frequency cell when the measurement result is that the inter-frequency cell exists in the cellular network; and the electronic device transmits a measurement report of a first type to the base station when the fifth frequency band and the second frequency band do not meet a fourth preset condition, and the fifth frequency band meets the first threshold condition, where the fourth preset condition is a condition indicating that interference exists between the fifth frequency band and the WIFI network, the measurement report of the first type indicates that the fifth frequency band meets a requirement of cellular communication, and the fifth frequency band includes the third frequency band; or
the electronic device obtains a sixth frequency band corresponding to the inter-system cell when the measurement result is that the inter-system cell exists in the cellular network; and the electronic device transmits a measurement report of a second type to the base station when the sixth frequency band and the second frequency band do not meet a fifth preset condition, and the sixth frequency band meets the second threshold condition, where the fifth preset condition is a condition indicating that interference exists between the sixth frequency band and the WIFI network, the measurement report of the second type indicates that the sixth frequency band meets the requirement of the cellular communication, and the sixth frequency band includes the third frequency band.

The related message about the fifth frequency band includes frequency point information and the like of the fifth frequency band corresponding to the inter-frequency cell. The related message about the sixth frequency band includes frequency point information and the like of the sixth frequency band corresponding to the inter-system cell. This is not limited herein.

In this way, when an inter-frequency cell without interference and meeting the communication condition exists, the cellular network may be adjusted to the inter-frequency cell, to reduce interference between cellular network communication and WIFI network communication, and reduce communication abnormal phenomena, thereby improving user experience. When an inter-system cell without interference and meeting the communication condition, the cellular network may be adjusted to the inter-system cell, to reduce the interference between the cellular network communication and the WIFI network communication, and reduce the communication abnormal phenomena, thereby improving the user experience.

Optionally, that the electronic device reduces a communication parameter corresponding to an interference bandwidth when the measurement result does not meet the third preset condition includes: the electronic device reduces the communication parameter corresponding to the interference bandwidth when the inter-frequency cell and the inter-system cell do not exist in the cellular network; or the electronic device reduces the communication parameter corresponding to the interference bandwidth when the inter-frequency cell exists but the inter-system cell does not exist in the cellular network, and the inter-frequency cell has interference with the WIFI network; or the electronic device reduces the communication parameter corresponding to the interference bandwidth when the inter-frequency cell does not exist but the inter-system cell exists in the cellular network, and the inter-system cell has interference with the WIFI network; or the electronic device reduces the communication parameter corresponding to the interference bandwidth when the inter-frequency cell and the inter-system cell exist in the cellular network, the inter-frequency cell has interference with the WIFI network, and the inter-system cell has interference with the WIFI network; or
the electronic device reduces the communication parameter corresponding to the interference bandwidth when the inter-frequency cell and the inter-system cell exist in the cellular network, the inter-frequency cell has no interference with the WIFI network, and the inter-system cell has interference with the WIFI network; or the electronic device reduces the communication parameter corresponding to the interference bandwidth when the inter-frequency cell exists but the inter-system cell does not exist in the cellular network, the inter-frequency cell has no interference with the WIFI network, and the communication parameter corresponding to the inter-frequency cell does not meet the first threshold condition; or the electronic device reduces the communication parameter corresponding to the interference bandwidth when the inter-frequency cell does not exist but the inter-system cell exists in the cellular network, the inter-system cell has no interference with the WIFI network, and the communication parameter corresponding to the inter-system cell does not meet the second threshold condition; or
the electronic device reduces the communication parameter corresponding to the interference bandwidth when the inter-frequency cell and the inter-system cell exist in the cellular network, the inter-frequency cell has no interference with the WIFI network, the inter-system cell has interference with the WIFI network, and the communication parameter corresponding to the inter-frequency cell does not meet the first threshold condition; or the electronic device reduces the communication parameter corresponding to the interference bandwidth when the inter-frequency cell and the inter-system cell exist in the cellular network, the inter-frequency cell has interference with the WIFI network, the inter-system cell has no interference with the WIFI network, and the communication parameter corresponding to the inter-system cell does not meet the second threshold condition; or the electronic device reduces the communication parameter corresponding to the interference bandwidth when the inter-frequency cell and the inter-system cell exist in the cellular network, the inter-frequency cell has no interference with the WIFI network, the inter-system cell has no interference with the WIFI network, the communication parameter corresponding to the inter-frequency cell does not meet the first threshold condition, and the communication parameter corresponding to the inter-system cell does not meet the second threshold condition.

Optionally, that the electronic device reduces a communication parameter corresponding to an interference bandwidth when the measurement result does not meet the third preset condition includes: the electronic device reduces the communication parameter corresponding to the interference bandwidth when the measurement result does not meet the third preset condition and the interference bandwidth is greater than a first value, where the first value is a difference between a first bandwidth and a second bandwidth, the first bandwidth is a bandwidth corresponding to the first frequency band, and the second bandwidth is a bandwidth required for a service performed by the cellular network.

In this way, when the interference bandwidth is small, the communication parameter corresponding to the interference bandwidth is adjusted to reduce a probability that the base station and the electronic device perform a service in the interference bandwidth, and reduce interference between two networks in the electronic device.

Optionally, the communication parameter includes one or more of the following: a transmit power of a sounding reference signal SRS, and a measurement value of a channel quality indicator CQI; and that the electronic device reduces the communication parameter corresponding to the interference bandwidth includes: the electronic device adjusts the transmit power of the SRS corresponding to the interference bandwidth from a first power to a second power, where the second power is less than the first power; and/or the electronic device adjusts the measurement value of the CQI corresponding to the interference bandwidth from a first measurement value to a second measurement value, where the second measurement value is less than the first measurement value.

In this way, the transmit power of the SRS signal corresponding to the interference bandwidth is reduced, thereby reducing the probability that the base station and the electronic device perform the service in the interference bandwidth, and reducing the interference between the two networks in the electronic device. The measurement value of the CQI corresponding to the interference bandwidth is reduced, thereby reducing the probability that the base station and the electronic device perform the service in the frequency band corresponding to the interference bandwidth, and reducing the interference between the two networks in the electronic device.

Optionally, the electronic device is preset with a first fallback value and/or a second fallback value; the second power meets that: the second power is equal to a difference between the first power and the first fallback value, and the first fallback value is in decibels; and the second measurement value meets that: the second measurement value is equal to a difference between the first measurement value and the second fallback value.

The first fallback value may correspond to an SRS power fallback bias; and the second fallback value may correspond to a CQI fallback bias.

Optionally, after the electronic device transmits an adjustment message to a base station, the method further includes: the electronic device cancels adjustment of the communication parameter.

In this way, the adjustment of the communication parameter is cleared, and impact of subsequent frequency band selection by the electronic device is reduced.

Optionally, the electronic device cancels adjustment of the communication parameter; and the electronic device adjusts the transmit power of the SRS corresponding to the interference bandwidth to the first power; and/or the electronic device adjusts the measurement value of the CQI corresponding to the interference bandwidth to the first measurement value.

In this way, setting of the SRS power and the measurement value setting of the CQI are cleared, to reduce impact of subsequent frequency band selection by the electronic device.

Optionally, before the electronic device performs inter-frequency measurement and/or inter-system measurement, the method further includes: the electronic device uploads a virtual measurement report to the base station, where the virtual measurement report is for assisting the base station in generating configuration information, and the configuration information is information about a parameter required by the electronic device to perform inter-frequency measurement and/or information about a parameter required by the electronic device to perform inter-system measurement; the electronic device receives the configuration information from the base station; and the electronic device performs inter-frequency measurement and/or inter-system measurement based on the configuration information.

The virtual measurement report may indicate that the first frequency band does not meet a requirement of cellular communication.

In this way, the electronic device may direct the base station to deliver information about a parameter required for neighboring cell measurement, and then perform inter-frequency measurement and/or inter-system measurement.

Optionally, that the electronic device transmits an adjustment message to a base station when the first frequency band and the second frequency band meet a first preset condition includes: the electronic device obtains an interference frequency band between the first frequency band and the second frequency band when the first frequency band and the second frequency band meet the first preset condition, where the interference frequency band is a frequency band meeting the first preset condition in the first frequency band; the electronic device transmits a second message to the base station when the electronic device is in the connected state and the interference frequency band meets a sixth preset condition, where the second message indicates to release the interference frequency band, and the sixth preset condition includes one or more of the following: the interference frequency band is a carrier aggregation secondary component carrier cell frequency band, and the interference frequency band is a dual-connectivity secondary cell group frequency band.

In this way, part of the interference frequency band can be released, and interference can be reduced.

Optionally, that the electronic device changes to a cellular network in a fourth frequency band when the first frequency band and the second frequency band meet the first preset condition and the electronic device is in an idle state includes: the electronic device obtains an interference frequency band between the first frequency band and the second frequency band when the first frequency band and the second frequency band meet the first preset condition, where the interference frequency band is a frequency band meeting the first preset condition in the first frequency band; the electronic device performs, when the electronic device is in the idle state and the interference frequency band meets a second preset condition, inter-frequency measurement and/or inter-system measurement, to obtain a measurement result, where the second preset condition includes not being a carrier aggregation secondary component carrier cell frequency band and not being a dual-connectivity secondary cell group frequency band; and the electronic device changes to the cellular network in the fourth frequency band when the measurement result meets a third preset condition.

The third preset condition includes one or more of the following: an inter-frequency cell and/or an inter-system cell exists in the cellular network; the inter-frequency cell has no interference with the WIFI network, and/or the inter-system cell has no interference with the WIFI network; and a communication parameter corresponding to the inter-frequency cell meets a first threshold condition, and/or a communication parameter corresponding to the inter-system cell meets a second threshold condition, where the first threshold condition is a minimum requirement for communication of the electronic device in a first cellular system, and the second threshold condition is a minimum requirement for communication of the electronic device in a second cellular system.

In this way, when the electronic device is in the idle state, the electronic device may change to a neighboring cell by reselection or the like, to reduce interference between the cellular network and the WIFI network.

According to a second aspect, embodiments of this application provide an electronic device. The electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The electronic device includes: a processor and a memory, where the memory stores computer-executable instructions; and the processor executes the computer-executable instructions stored in the memory, to cause the electronic device to perform the method according to the first aspect.

According to a third aspect, embodiments of this application provide a computer-readable storage medium, where the computer-readable storage medium stores a computer program. When the computer program is executed by a processor, the method according to the first aspect is implemented.

According to a fourth aspect, embodiments of this application provide a computer program product including a computer program, the computer program, when run, causing a computer to perform the method according to the first aspect.

According to a fifth aspect, embodiments of this application provide a chip. The chip includes a processor, and the processor is configured to call a computer program in a memory to perform the method according to the first aspect.

It should be understood that the second aspect to the fifth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of a hardware structure of a terminal device according to an embodiment of this application;
FIG. 2 is a schematic diagram of a software structure of a terminal device according to an embodiment of this application;
FIG. 3 is a waveform diagram of a radio frequency signal according to an embodiment of this application;
FIG. 4A, 4B, and 4C are schematic flowcharts of a cellular network communication method according to an embodiment of this application;
FIG. 5 is a schematic flowchart of a cellular network communication method according to an embodiment of this application; and
FIG. 6 is a schematic structural diagram of a cellular network communication apparatus according to an embodiment of this application.

### DESCRIPTION OF EMBODIMENTS

To facilitate clear descriptions of technical solutions of embodiments of this application, the following briefly introduces some terms and technologies involved in embodiments of this application:
1. Cellular network (cellular network): It is a mobile communication hardware architecture, and is divided into an analog cellular network and a digital cellular network. Since signal coverage of communication base stations that form network coverage is hexagonal, an entire network is called like a cell. The cellular network may also be referred to as a mobile network (mobile network).
   Types of the cellular network include: a global system for mobile communications (global system for mobile communications, GSM) network, a code division multiple access (code division multiple access, CDMA) network, a 3^{rd}-generation network (3^{rd}-generation network, 3G network), a frequency division multiple access (frequency division multiple access, FDMA) network, a time division multiple access (time division multiple access, TDMA) network, a PDC, a TACS, an AMPS, a 4^{th}-generation network (4^{th}-generation network, 4G network), a 5^{th}-generation network (5^{th}-generation network, 5G network), a higher generation mobile communication technology network, or the like.
2. Carrier aggregation (carrier aggregation, CA): It refers to a technology of improving a data rate and a capacity by combining a plurality of independent carrier channels to improve a bandwidth. The carrier aggregation is divided into three combinations: intra-band contiguous, intra-band discontinuous, and inter-band discontinuous, and implementation complexity increases successively.
3. Dual-connectivity (dual-connectivity, DC): In a connected state, an electronic device can use wireless resources of at least two different base stations at the same time. The two base stations may be divided into a master station and a slave station.
4. Wireless local area network (wireless local area network, WLAN): A wireless computer network connects two or more devices to form a local area network (local area network, LAN) by using a wireless channel instead of a wired transmission medium.

During the evolution and development of the WLAN, there are many implementation technology standards, such as Bluetooth, WIFI, and HyperLAN2. It may be understood that the WLAN network includes: Bluetooth, a WIFI network, and the like. This is not limited in embodiments of this application.

### 5. Other terms

In embodiments of this application, words such as "first" and "second" are used to distinguish same or similar items with a basically same function and role. For example, a first chip and a second chip are merely used to distinguish between different chips, and are not intended to limit a sequence thereof. A person skilled in the art may understand that the terms such as "first" and "second" do not define a quantity and an execution sequence, and the terms such as "first" and "second" do not indicate a definite difference.

It should be noted that in embodiments of this application, the terms, such as "exemplary" and "for example", are used to represent giving an example, an illustration, or a description. Any embodiment or design solution described as an "exemplary" or "for example" in this application should not be explained as being more preferred or having more advantages than another embodiment or design solution. To be precise, the use of the words such as "exemplary" or "for example" is intended to present a related concept in a specific manner.

In embodiments of this application, "at least one" refers to one or more, and "a plurality of" refers to two or more. "And/or" describes an association relationship between associated objects and represents that three relationships may exist. For example, A and/or B may represent the following three cases: only A exists, both A and B exist, and only B exists, where A and B may be singular or plural. The character "/" generally represents that the associated object is in an "or" relationship. "At least one of the following items (pieces)" or similar expressions refers to any combination of these items, including any combination of singular items (pieces) or plural items (pieces). For example, at least one of a, b, or c may represent: a, b, c, a-b, a-c, b-c, or a-b-c, where a, b, and c may be single or multiple.

### 6. Terminal device

The terminal device in embodiments of this application may also be an electronic device in any form. For example, the electronic device may include a handheld device, an in-vehicle device, or the like having an image processing function. For example, some electronic devices are: a mobile phone (mobile phone), a tablet computer, a palmtop computer, a notebook computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a terminal device in a future 5G network, a terminal device in a future evolved public land mobile network (public land mobile network, PLMN), and the like. This is not limited in embodiments of this application.

As an example rather than a limitation, in embodiments of this application, the electronic device may also be a wearable device. The wearable device may also be referred to as a wearable smart device, and is a collective term for wearable devices developed by intelligently designing daily wearing based on a wearable technology, for example, glasses, gloves, a watch, clothing, and shoes. A wearable device is a portable device that can be directly worn on a body or integrated into clothes or an accessory of a user. A wearable device is not merely a hardware device, but is used to implement a powerful function through software support, data exchange, and cloud interaction. Generalized wearable smart devices include full-featured and large-size devices that can implement complete or partial functions without depending on smart phones, such as smart watches or smart glasses, and devices that focus on only one type of application and need to work with other devices such as smart phones, for example, various smart bracelets or smart jewelry for monitoring physical signs.

In addition, in embodiments of this application, the electronic device may also be a terminal device in an Internet of things (Internet of things, IoT) system. IoT is an important part in future development of information technologies, and is mainly technically characterized in that things are connected to networks through communication technologies, so as to achieve intelligent networks of human-machine interconnection and interconnection between things.

The electronic device in embodiments of this application may also be referred to as: a terminal device, user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communications device, a user agent, or a user apparatus.

In embodiments of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software.

To better understand embodiments of this application, the following describes a structure of the terminal device in embodiments of this application.

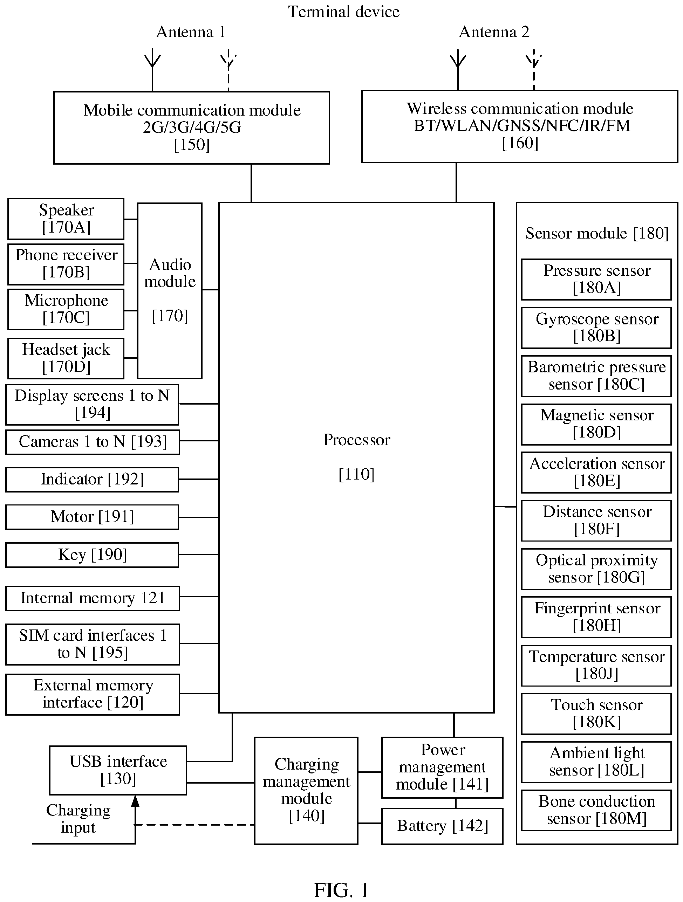

As shown in FIG. 1, the terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the terminal device. In some other embodiments of this application, the terminal device may include more or fewer components than those shown in the figure, or combine some components, or split some components, or have different component arrangements. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may generate an operation control signal based on an instruction operation code and a timing signal, and implement control on instruction fetching and instruction execution.

A memory configured to store instructions and data may be further disposed in the processor 110. In some embodiments, the memory in the processor 110 is a cache. The memory may store an instruction or data that has just been used or cyclically used by the processor 110. If the processor 110 needs to use the instruction or the data again, the processor may directly call the instruction or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C or IIC) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be coupled to the touch sensor 180K, a charger, a flash light, the camera 193, and the like by using different I2C bus interfaces. For example, the processor 110 may be coupled to the touch sensor 180K by using the I2C interface, so that the processor 110 communicates with the touch sensor 180K by using the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transfer an audio signal to the wireless communication module 160 by using the I2S interface, to implement a function of answering a call by using a Bluetooth headset.

It may be understood that an interface connection relationship between the modules illustrated in embodiments of this application is merely an example for description, and does not constitute a limitation on a structure of the terminal device. In some other embodiments of this application, the terminal device may alternatively use an interface connection manner different from that in the foregoing embodiment, or use a combination of a plurality of interface connection manners.

The terminal device implements a display function by using the GPU, the display screen 194, the application processor, and the like. The GPU is a microprocessor for image processing, and is connected to the display screen 194 and the application processor. The GPU is configured to perform mathematical and geometric calculation and perform graphics rendering. The processor 110 may include one or more GPUs and execute program instructions to generate or change display information.

The terminal device may implement a photographing function by using the ISP, the camera 193, the video codec, the GPU, the display screen 194, the application processor, and the like.

The external memory interface 120 may be configured to connect to an external storage card such as a micro SD card, to extend a storage capability of the terminal device. The external storage card communicates with the processor 110 by using the external memory interface 120, to implement a data storage function, for example, storing a file such as music or a video in the external storage card.

The internal memory 121 may be configured to store computer executable program code, where the executable program code includes instructions. The internal memory 121 may include a program storage area and a data storage area. The program storage area may store an operating system, an application program required by at least one function (for example, a sound playback function and an image display function), and the like. The data storage area may store data (such as audio data and an address book) created during use of the terminal device, and the like. In addition, the internal memory 121 may include a high-speed random access memory, and may also include a non-volatile memory, for example, at least one magnetic disk storage device, a flash memory device, or a universal flash storage (universal flash storage, UFS). The processor 110 executes various functional applications and data processing of the terminal device by running the instructions stored in the internal memory 121 and/or the instructions stored in the memory disposed in the processor. For example, the method in embodiments of this application may be performed.

It may be understood that the structure shown in embodiments of this application does not constitute a specific limitation on the terminal device. In some other embodiments of this application, the terminal device may include more or fewer components than those shown in the figure, or combine some components, or split some components, or have different component arrangements. The components shown in the figure may be implemented by hardware, software, or a combination of software and hardware.

The electronic device may transmit and receive information through a cellular network, thereby making a call, receiving a call, displaying real-time weather, browsing a web page, watching a video, and the like. The electronic device may further provide a hotspot service and the like to another electronic device.

However, when the electronic device provides the hotspot service to the another electronic device through a WIFI network, the hotspot service may be stuttered, or when the electronic device uses the cellular network to make a video call while connected to the WIFI network to surf the Internet, problems such as stuttering of the video call and interruption of the call may occur, leading to poor user experience.

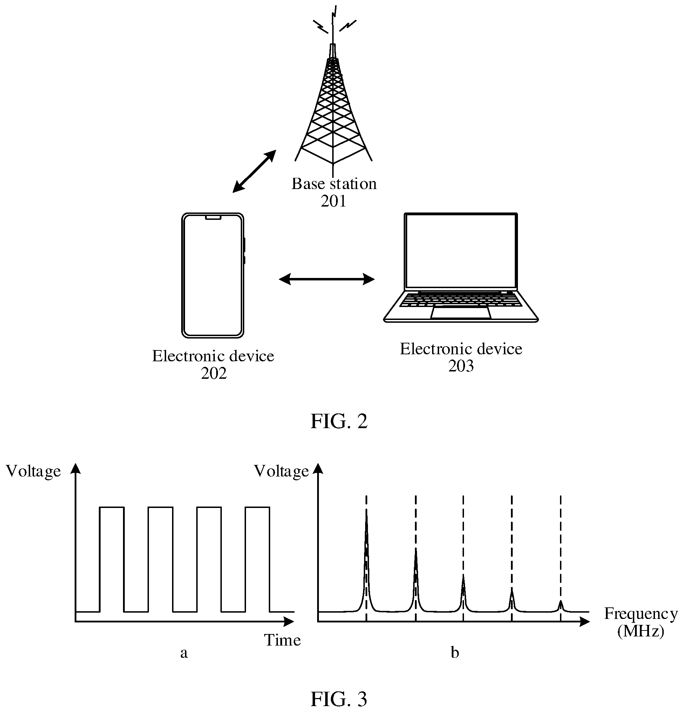

For example, FIG. 2 is a schematic diagram of an application scenario according to an embodiment of this application. The application scenario includes a base station 201, an electronic device 202, and an electronic device 203. The electronic device 202 may interact with the base station 201 through a cellular network to transmit and receive information, such as making a call, receiving a call, displaying real-time weather, browsing a web page, watching a video, and the like. The electronic device 202 may interact with the electronic device 203 through a wireless network, so that the electronic device 203 may also browse a web page, watch a video, and the like.

However, when the electronic device 202 provides a hotspot service to the electronic device 203, a hotspot service used by the electronic device 203 may be stuttered. Adaptively, the electronic device 203 may encounter stuttering of video playback or even be disconnected from the electronic device 202.

When the electronic device 202 uses the cellular network to make a video call while connected to the WIFI network to surf the Internet, the electronic device 202 may have problems such as stuttering of the video call and interruption of the call.

Based on this, in embodiments of this application, by analyzing a reason that an electronic device without a hardware or software malfunction cannot normally run and display, it is found that the electronic device cannot normally call or display because: in some scenarios, a mobile communication module and a wireless communication module of the electronic device may interfere with each other, resulting in poor stability.

In a possible design one, the electronic device reduces a transmit power of the cellular network or the wireless network to reduce interference between the cellular network and the wireless network.

In a possible design two, the electronic device switches an antenna to reduce the interference between the cellular network and the WIFI network.

However, the foregoing two manners have a limited effect of reducing the interference, and the electronic device still has the problems of stuttering and disconnection.

In view of this, embodiments of this application provide a cellular network communication method and a related apparatus. The electronic device adjusts a frequency band corresponding to the cellular network, to reduce mutual interference in a coexistence scenario of the cellular network and the WIFI network.

Specifically, the base station is directed to change, in a manner of adjusting neighboring cell evaluation and neighboring cell handover/redirection/reestablishment/reselection, the frequency band corresponding to the cellular network used by the electronic device, to avoid interference; and when the neighboring cell does not meet a threshold condition, the base station is directed to perform frequency selection through a sounding reference signal SRS and a CQI feedback, to avoid interference.

It may be understood that the method provided in embodiments of this application may be applied to the following several scenarios in which the cellular network and the wireless network are both used.

Scenario 1: An electronic device provides a hotspot service.

In some embodiments, when the electronic device provides the hotspot service to another electronic device through a WIFI network, the electronic device exchanges information with the base station through the cellular network, for example, makes a call, browses a web page, watches a video, and the like. It may also be understood that when mobile data is enabled, the hotspot service is provided to the another electronic device.

Scenario 2: A scenario in which an electronic device uses a cellular network when the electronic device is connected to a WIFI network to surf the Internet. For example, the electronic device uses the cellular network to make a video call when the electronic device is connected to the WIFI network to surf the Internet.

Scenario 3: A scenario in which an electronic device uses link turbo (link turbo).

It should be noted that the link turbo may implement combined utilization of a wireless local area network (WLAN) and the cellular network (for example, a 4G network) on the electronic device, thereby improving network experience such as a networking speed, network handover, and real-time performance of the electronic device.

It may be understood that the frequency band of the cellular network may cover a frequency band of the WIFI network, or the frequency band of the cellular network partially overlaps with the frequency band of the WIFI network. For example, a 2.4G frequency band of the WIFI network and an N41 frequency band of the cellular network; and the 2.4G frequency band of the WIFI network and a B7 frequency band of the cellular network.

A frequency range corresponding to the 2.4G frequency band of the WIFI network is 2.412 GHz to 2.497 GHz; a frequency range corresponding to the N41 frequency band is 2.496 GHz to 2.675 GHz; and an uplink frequency range corresponding to the B7 frequency band is 2.500 GHz to 2.570 GHz, and a downlink frequency range corresponding to the B7 frequency band is 2.620 GHz to 2.690 GHz.

In addition, a divided frequency or a multiplied frequency of the cellular network may also be within the frequency band of the WIFI network, thereby generating interference. When a frequency used for cellular network communication is close to a frequency used for WIFI network communication, interference may also be generated.

It should be noted that FIG. 3 is a waveform diagram of a radio frequency signal according to an embodiment of this application. As shown in a of FIG. 3, the radio frequency signal is represented as a square wave in time domain. According to the Fourier transform principle, the radio frequency signal shown in a of FIG. 3 can be regarded as being formed through superposition of a fundamental wave and harmonics of integer multiplied frequencies in frequency domain. In addition, the higher the multiplied frequency, the smaller an amplitude of the harmonic, and the smaller a power of noise. As shown in b of FIG. 3, the fundamental wave has a highest voltage amplitude, and the higher the multiplied frequency, the smaller the amplitude of the harmonic.

When a multiplied frequency harmonic of a signal of the cellular network falls within a communication frequency band of the wireless network, interference at a specific frequency may be generated, further interfering with the wireless communication module, affecting communication of the wireless communication module, and causing communication interruption, stuttering, and the like. When a multiplied frequency harmonic of a signal of the wireless network falls within a communication frequency band of the cellular network, interference at a specific frequency may be generated, further interfering with the cellular communication module, affecting communication of the cellular communication module, and causing communication interruption, stuttering, and the like.

It should be noted that the cellular network and the wireless network may form co-frequency interference, or may form multiplied frequency interference or beat frequency interference. This is not limited herein. The cellular network and the wireless network may be scheduled continuously or promptly. A duration, a frequency, and the like of two types of network scheduling are not limited in embodiments of this application.

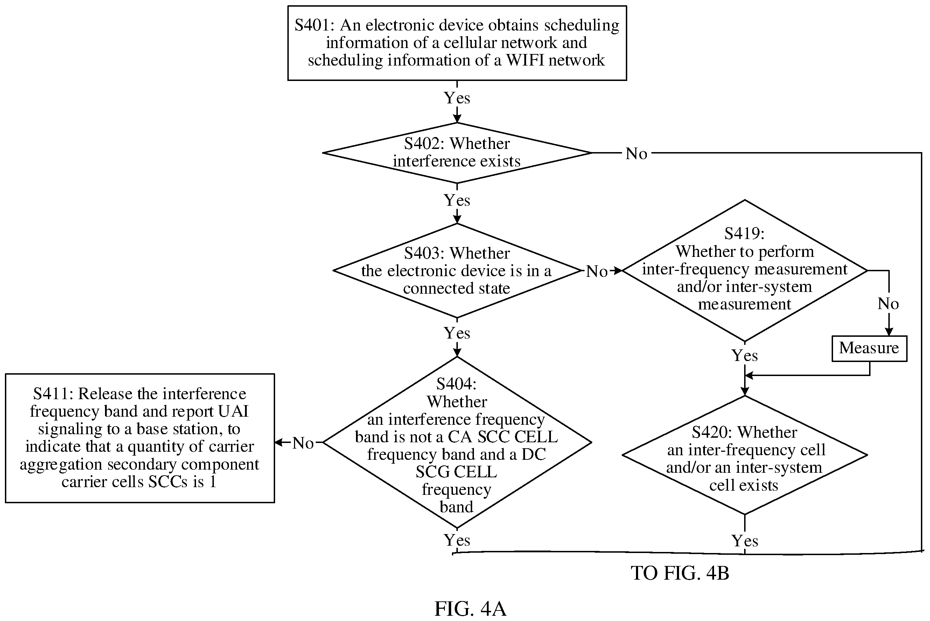

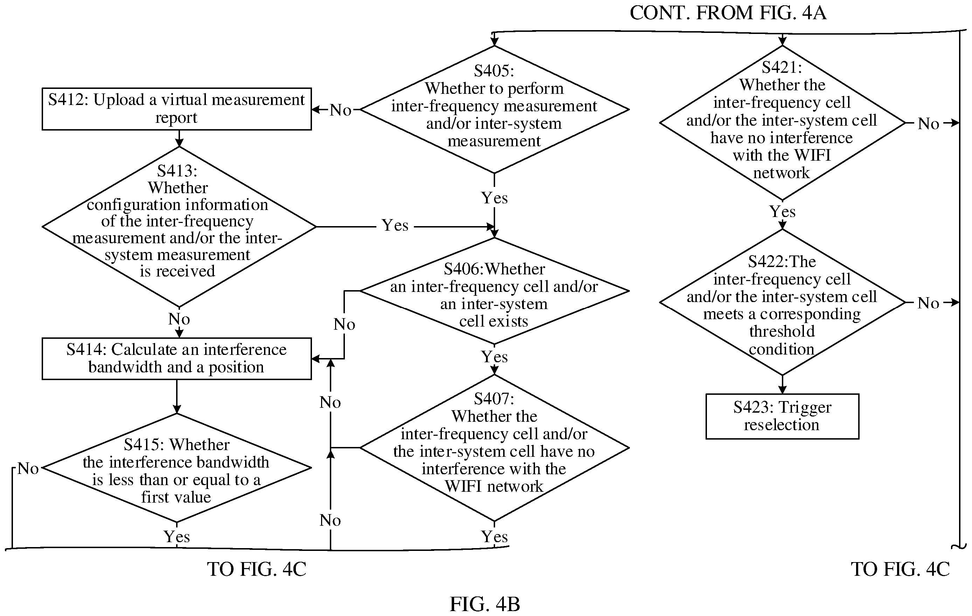

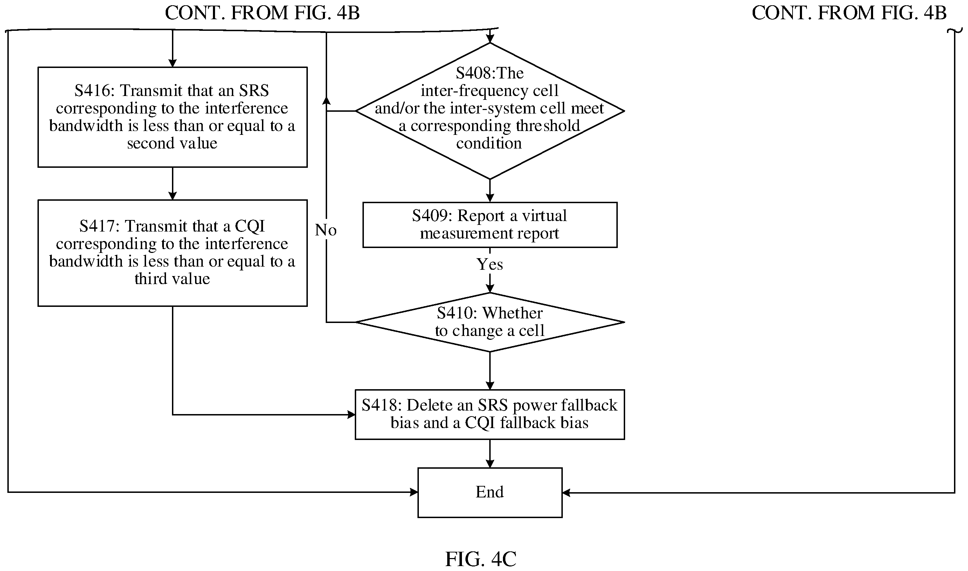

The method provided in embodiments of this application is described below with reference to FIG. 4A, 4B, and 4C. For example, FIG. 4A, 4B, and 4C are schematic flowcharts of a communication method according to an embodiment of this application.

Using coexistence of the cellular network and the WIFI network as an example, as shown in FIG. 4A, 4B, and 4C, the method includes the following steps.

S401: An electronic device obtains scheduling information of a cellular network and scheduling information of a WIFI network.

The scheduling information includes a frequency band, a connection status, a service status, and the like.

The connection status includes a connected state and an idle state. In some embodiments, the connection status further includes a deactivated state. The deactivated state may be processed according to a procedure of the idle state.

It may be understood that the electronic device may bear and confirm the service status through a QCI. When the QCI is 1, the service status corresponds to a voice session; when the QCI is 2, the service status corresponds to a video session; when the QCI is 3, the service status corresponds to a real-time game; when the QCI is 4, the service status corresponds to a non-session video; when the QCI is 5, the service status corresponds to IMS signaling; and when the QCI is 9, the service status corresponds to a data service (including an OTT call or a video service).

It should be noted that bandwidths corresponding to different services may be different.

S402: The electronic device determines, based on a frequency band of the cellular network and a frequency band of the WIFI network, whether interference exists.

It may be understood that, interference exists when the frequency band of the cellular network overlaps with the frequency band of the WIFI network, or a multiplied frequency or a beat frequency of the frequency band of the cellular network is within the frequency band of the WIFI network, or a multiplied frequency or a beat frequency of the frequency band of the WIFI network is within the frequency band of the cellular network.

In some embodiments, interference exists when a frequency used for cellular network communication is close to a frequency used for WIFI network communication. When a difference between the frequency used for the cellular network communication and the frequency used for the WIFI network communication is less than a preset value, interference exists.

When interference exists between the frequency band of the cellular network and the frequency band of the WIFI network, the electronic device performs S403. When no interference exists between the frequency band of the cellular network and the frequency band of the WIFI network, no adjustment is performed.

S403: Whether the electronic device is in a connected state in the cellular network.

It may be understood that when the electronic device has a radio resource control (radio resource control, RRC) connection, the electronic device is in the connected state; and when the electronic device does not have the RRC connection, the electronic device is in the idle state or the deactivated state.

When the electronic device is in the connected state, the electronic device performs S405; and when the electronic device is in the idle state, the electronic device performs S418.

The following describes a process of the electronic device in the connected state.

S404: The electronic device determines whether an interference frequency band is not a carrier aggregation secondary component carrier cell (carrier aggregation secondary component carrier cell, CA SCC CELL) frequency band or a dual-connectivity secondary cell group (dual-connectivity secondary cell group, DC SCG CELL) frequency band.

The interference frequency band is a frequency band corresponding to interference between the cellular network and the WIFI network.

It may be understood that in embodiments of this application, the cellular network is adjusted. The interference frequency band includes: a frequency band of the cellular network corresponding to an overlapping part of the frequency band of the cellular network and the frequency band of the WIFI network; and a corresponding frequency band of the cellular network when the multiplied frequency or the beat frequency of the frequency band of the cellular network is within the frequency band of the WIFI network; or a corresponding frequency band of the cellular network when the multiplied frequency or the beat frequency of the frequency band of the WIFI network is within the frequency band of the cellular network.

When the interference frequency band is not the carrier aggregation secondary component carrier cell frequency band and is not a dual-connectivity secondary cell group frequency band, the electronic device performs S405; and when the interference frequency band is the carrier aggregation secondary component carrier cell frequency band or a dual-connectivity secondary cell group frequency band, the electronic device performs S411.

S405: Determine whether to perform inter-frequency measurement and/or inter-system measurement.

In embodiments of this application, the electronic device may determine, based on a received RRC ConnectionReconfiguration message, whether to perform inter-frequency measurement.

It may be understood that if the electronic device needs to perform inter-frequency measurement, the base station configures the electronic device with a GAP parameter: a gap mode and a gapOffset. The GAP parameter is included in a measGapConfig information element in a MeasConfig field in the RRC ConnectionReconfiguration message transmitted by the base station to the electronic device.

If the electronic device performs inter-frequency and/or inter-system measurement, the electronic device performs S406. If the electronic device does not perform inter-frequency measurement and inter-system measurement, the electronic device performs S413.

The inter-frequency is that channels (frequencies) received and transmitted are different, that is, radio frequency signals with different frequencies are used for receiving and transmitting. The inter-frequency measurement may be understood as measuring communication in a frequency band other than a current frequency band in the same cellular network system.

The inter-system means different cellular network systems. The inter-system measurement may be understood as measuring communication of a cellular network system other than a current cellular network system.

S406: Whether an inter-frequency cell and/or an inter-system cell exists.

The inter-frequency cell is a cell other than a cell corresponding to current communication in the same cellular network system. The inter-system cell is a cell of a cellular network system other than the current cellular network system.

If the inter-frequency cell and/or the inter-system cell exists in the electronic device, the electronic device performs S407. If the inter-frequency cell and the inter-system cell do not exist in the electronic device, the electronic device performs S414.

S407: Determine whether the inter-frequency cell has no interference with the WIFI network, and/or the inter-system cell has no interference with the WIFI network.

If the inter-frequency cell and (or) the inter-system cell have no interference with the WIFI network, the electronic device performs S408; and if the inter-frequency cell and (or) the inter-system cell have interference with the WIFI network, the electronic device performs S415.

It may be understood that, if the electronic device does not have interference between the inter-frequency cell and the WIFI network and does not have interference between the inter-system cell and the WIFI network, the electronic device performs S408.

if the electronic device has interference between the inter-frequency cell and the WIFI network and has interference between the inter-system cell and the WIFI network, the electronic device performs S414.

It may be understood that if interference exists in S407, further refinement processing is performed on the interference frequency band. If no interference exists, signal quality of the inter-frequency cell and/or the inter-system cell is determined.

S408: Determine whether the inter-frequency cell and/or the inter-system cell meet a corresponding threshold condition.

The threshold condition indicates a minimum requirement for the inter-frequency cell and/or the inter-system cell to meet cellular communication. The threshold condition includes: the signal quality is greater than a first threshold, and the like. The threshold condition may be set according to an actual situation or experience. A specific situation of the threshold condition is not limited in embodiments of this application.

If the inter-frequency cell and/or the inter-system cell meets the corresponding threshold condition, S409 is performed; and if the inter-frequency cell or the inter-system cell does not meet the corresponding threshold condition, the electronic device performs S414.

It may be understood that if the inter-frequency cell and/or the inter-system cell meets the corresponding threshold condition, the signal quality of the inter-frequency cell and/or the inter-system cell is good, and handover, redirection, and the like may be performed. If neither the inter-frequency cell nor the inter-system cell meets the corresponding threshold condition, the signal quality of the inter-frequency cell and the inter-system cell is poor, which is not suitable for handover, redirection, and the like.

It may be understood that, using an example in which the current cellular network corresponds to a first cellular system, if a communication parameter corresponding to the inter-frequency cell meets a first threshold condition, and/or a communication parameter corresponding to the inter-system cell meets a second threshold condition, the terminal device performs S409.

The first threshold condition is a minimum requirement for communication of the electronic device in the first cellular system, and the second threshold condition is a minimum requirement for communication of the electronic device in a second cellular system. The first cellular system is different from the second cellular system.

It may be understood that the first cellular system may be any one of communication systems such as a third generation 3G mobile communication system, a fourth generation 4G mobile communication system, a fifth generation 5G mobile communication system, or a future communication system (such as a sixth generation 6G mobile communication system). The second cellular system may be any one of communication systems such as a 3G mobile communication system, a 4G mobile communication system, a 5G mobile communication system, or a future communication system (such as a 6G mobile communication system).

Specifically, if the inter-frequency cell does not exit but the inter-system cell exists, the terminal device does not perform inter-frequency measurement and performs inter-system measurement; when the inter-system cell meets the second threshold condition, the electronic device performs S409; and when the inter-system cell does not meet the second threshold condition, the electronic device performs S414.

If the inter-frequency cell exists but the inter-system cell does not exist, the terminal device performs inter-frequency measurement and does not perform inter-system measurement. When the inter-frequency cell meets the first threshold condition, the electronic device performs S409; and when the inter-frequency cell does not meet the first threshold condition, the electronic device performs S414.

If the inter-frequency cell and the inter-system cell exist, the terminal device performs inter-frequency measurement and inter-system measurement. When the inter-frequency cell meets the first threshold condition or the inter-system cell meets the second threshold condition, the electronic device performs S409; and when the inter-frequency cell does not meet the first threshold condition and does not meet the second threshold condition, the electronic device performs S414.

In some embodiments, the electronic device first performs inter-frequency measurement. When the inter-frequency measurement meets the first threshold condition, the electronic device performs S409, and does not perform inter-system measurement. When the inter-frequency measurement does not meet the first threshold condition, the electronic device performs inter-system measurement. When the inter-system measurement meets the second threshold condition, the electronic device performs S409. A sequence of the inter-frequency measurement and the inter-system measurement is not limited in embodiments of this application.

S409: Report a virtual measurement report.

In embodiments of this application, the virtual measurement report may include an A3 event, a B1 event, a B2 event, and the like.

The A3 event indicates that quality of a neighboring cell is higher than a threshold of a serving cell for co-frequency or inter-frequency coverage-based handover.

The B1 event indicates that quality of an inter-system neighboring cell is higher than a specific threshold, to initiate inter-system handover.

The B2 event indicates that quality of a serving cell is lower than a specific threshold and quality of an inter-system neighboring cell is higher than a specific threshold, to initiate inter-system handover.

Adaptively, the base station changes a cell corresponding to the electronic device based on the virtual measurement report. For example, the base station performs inter-frequency handover (inter-frequency handover, IFHO) based on a measurement report corresponding to the A3 event. The base station performs inter-system handover (inter-radio access technology, IRAT) based on a measurement report corresponding to the B1 event or a measurement report corresponding to the B2 event.

S410: The electronic device determines whether to change a cell (handover/redirection/reestablishment/reselection).

Adaptively, the electronic device switches the cellular network to a changed cell. If the cellular network does not change the cell, the electronic device performs S414.

It may be understood that the electronic device determines whether to change the cell based on a message fed back by the base station. The base station may change a corresponding cell during the cellular network communication of the electronic device in a manner such as handover or redirection.

It may be understood that when the electronic device is in the idle state, the cell is changed through reselection. When the electronic device is in the connected state, the cell is changed through handover, redirection, or reestablishment.

In conclusion, the electronic device evaluates the inter-frequency cell or the inter-system cell when interference exists, to adjust the frequency band of the cellular network, reduce the interference between the cellular network and another network, and reduce phenomena such as a drop call or stuttering in a coexistence scenario of the cellular network and the another network, thereby improving user experience.

The foregoing S405 to S410 describe a method procedure of adjusting the frequency band of the cellular network to reduce the interference between the cellular network and another network. The following describes, with reference to S411 to S416, another method procedure of reducing evaluation of the frequency band corresponding to the interference bandwidth by the base station, to reduce the interference between the cellular network and another network.

S411: Release an interference frequency band.

In some embodiments, the electronic device may release the interference frequency band through radio resource control (radio resource control, RRC) connection reconfiguration (connection reconfiguration) signaling.

In some embodiments, the electronic device reports UE assistance information (UE Assistance Information, UAI) signaling to the base station. The UAI signaling indicates that a quantity of carrier aggregation secondary component carrier cells SCCs is 1.

In this way, the base station may adjust the quantity of carrier aggregation secondary component carrier cells to 1 based on the UAI signaling, to release a secondary cell corresponding to the interference frequency band, so as to reduce interference.

S412: Upload a virtual measurement report to a base station, to trigger inter-frequency and/or inter-system measurement.

In embodiments of this application, the electronic device may upload an A2 event to the base station. The A2 event indicates that quality of a serving cell is lower than a threshold, and is for enabling inter-frequency or inter-system measurement to activate GAP.

S413: Receive configuration information of the inter-frequency measurement and/or the inter-system measurement.

The configuration information may be obtained from a MeasObjectToAddMod unit in an RRC message delivered by the base station. The configuration information includes, but is not limited to: a measurement frequency (frequency), a subcarrier spacing (SubcarrierSpacing), a measurement time configuration (for example, a time offset and duration), and the like.

If the configuration information corresponding to the inter-frequency measurement and/or the inter-system measurement is not received, the electronic device performs S415; and if the configuration information corresponding to the inter-frequency measurement and/or the inter-system measurement is received, the electronic device performs S406.

S414: Calculate an interference bandwidth and a position.

In some embodiments, the interference bandwidth may be a first bandwidth, or may be a sum of the first bandwidth and a second bandwidth, or may be a sum of the first bandwidth and a third bandwidth, or may be a sum of the first bandwidth, the second bandwidth, and the third bandwidth. The first bandwidth is a bandwidth corresponding to the overlapping part of the frequency band of the cellular network and the frequency band of the WIFI network. The second bandwidth is a bandwidth corresponding to a part of the multiplied frequency or the beat frequency of the frequency band of the cellular network within the frequency band of the WIFI network, and the third bandwidth is a bandwidth corresponding to a part of the multiplied frequency or the beat frequency of the frequency band of the WIFI network within the frequency band of the cellular network.

S415: Determine whether the interference bandwidth is less than or equal to a first value, where the first value is a difference between a network bandwidth and a service requirement bandwidth.

The network bandwidth is a bandwidth of a frequency band corresponding to the cellular network. The service requirement bandwidth is a bandwidth required by a service performed by the cellular network.

If the interference bandwidth is less than or equal to the first value, the electronic device performs S416 and/or S417; and if the interference bandwidth is greater than the first value, the electronic device does not perform adjustment.

S416: Transmit that a sounding reference signal (sounding reference signal, SRS) corresponding to the interference bandwidth is less than or equal to a second value, where the second value is a difference between an SRS transmit power and an SRS fallback bias.

The SRS fallback bias may be set according to an actual situation or experience. A specific value of the SRS fallback bias is not limited in embodiments of this application.

For example, using an example in which the SRS transmit power is 15 dbm and the SRS fallback bias is 5 db, a transmit power of the SRS corresponding to the interference bandwidth is a difference between 15 dbm and 5 db, that is, 10 dbm.

In this way, the transmit power of the SRS signal corresponding to the interference bandwidth is reduced, thereby reducing a probability that the base station and the electronic device perform a service in the frequency band corresponding to the interference bandwidth, and reducing the interference between two networks in the electronic device.

S417: Transmit that a channel quality indicator (channel quality indicator, CQI) corresponding to the interference bandwidth is less than or equal to a third value, where the third value is a difference between a CQI measurement value and a CQI fallback bias.

The CQI fallback bias may be set according to an actual situation or experience. A specific value of the SRS fallback bias is not limited in embodiments of this application.

In this way, the measurement value of the CQI corresponding to the interference bandwidth is reduced, thereby reducing the probability that the base station and the electronic device perform a service in the frequency band corresponding to the interference bandwidth, and reducing the interference between two networks in the electronic device.

S418: Delete an SRS power fallback bias and the CQI fallback bias.

In this way, the SRS power fallback bias and the CQI fallback bias are cleared, to reduce impact of subsequent frequency band selection by the electronic device.

In conclusion, when interference exists, the electronic device adjusts the SRS signal, the CQI measurement value, and the like corresponding to the interference bandwidth, to reduce evaluation of the frequency band corresponding to the interference bandwidth by the base station, and reduce a possibility of using the interference bandwidth to perform a service. In this way, the interference between the cellular network and another network is reduced, and phenomena such as a drop call and stuttering in a coexistence scenario of the cellular network and another network are reduced, thereby improving user experience.

A method procedure when the electronic device is in the idle state is described below with reference to S419 to S423.

S419: Determine whether to perform inter-frequency and/or inter-system measurement.

For details, refer to the foregoing related description of S405. Details are not described herein again.

If the electronic device performs inter-frequency and/or inter-system measurement, the electronic device performs S420. If the electronic device does not perform inter-frequency measurement and inter-system measurement, the inter-frequency measurement and/or the inter-system measurement is enabled, and S420 is then performed.

S420: Whether an inter-frequency cell and/or an inter-system cell exists.

If the electronic device uses the inter-frequency cell and/or the inter-system cell, the electronic device performs S421; and if the electronic device does not use the inter-frequency cell and the inter-system cell, the electronic device does not perform adjustment.

S421: Determine whether the inter-frequency cell and/or the inter-system cell have no interference with the WIFI network.

For details, refer to the foregoing related description of S407. Details are not described herein again.

If the inter-frequency cell and/or the inter-system cell have no interference with the WIFI network, the electronic device performs S422.

S422: Determine whether the inter-frequency cell and/or the inter-system cell meets a threshold.

If the threshold is met, the electronic device performs S415.

S423: The electronic device performs reselection.

In conclusion, the electronic device evaluates the inter-frequency cell or the inter-system cell when the electronic device is in the idle state, to adjust the frequency band of the cellular network, so as to reduce the interference between the cellular network and another network, and reduce phenomena such as a drop call and stuttering in a coexistence scenario of the cellular network and another network, thereby improving user experience.

In conclusion, the electronic device may adjust the frequency band of the cellular network when a coexistence interference scenario occurs, to reduce the interference between the cellular network and another network (for example, the WIFI network). The electronic device may adjust the frequency band of the cellular network through neighboring cell evaluation, neighboring cell handover, redirection, and reselection; and when the neighboring cell does not meet a threshold condition, the base station is directed to perform frequency selection through an SRS and a CQI feedback, to reduce a probability that the interference frequency band is selected.

It may be understood that the foregoing procedure shown in FIG. 4A, 4B, and 4C is described by using the interference between the cellular network and the WIFI network as an example. The WIFI network may alternatively be replaced with another wireless network, such as a Bluetooth network. This is not limited in embodiments of this application.

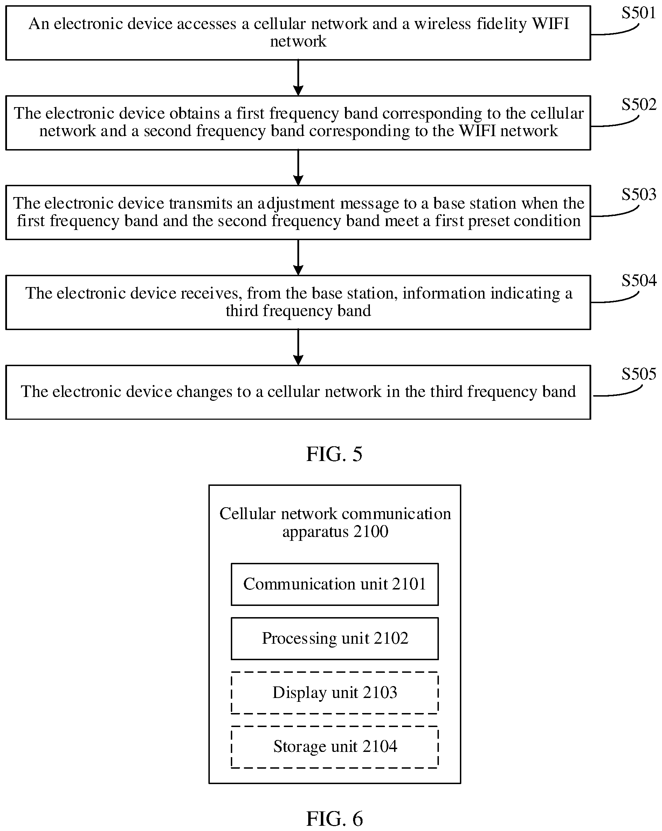

For example, FIG. 5 is a schematic flowchart of a cellular network communication method according to an embodiment of this application. As shown in FIG. 5, the method includes the following steps.

S501: An electronic device accesses a cellular network and a wireless fidelity WIFI network.

S502: The electronic device obtains a first frequency band corresponding to the cellular network and a second frequency band corresponding to the WIFI network.

S503: The electronic device transmits an adjustment message to a base station when the first frequency band and the second frequency band meet a first preset condition and the electronic device is in a connected state, where the adjustment message indicates to adjust a frequency band corresponding to the cellular network, and the first preset condition is a condition indicating that interference exists between the cellular network and the WIFI network.

It may be understood that when the first frequency band overlaps with the second frequency band, or a multiplied frequency or a beat frequency of the first frequency band is within the second frequency band, or a multiplied frequency or a beat frequency of the second frequency band is within the first frequency band, interference exists.

In some embodiments, interference exists when a frequency used for cellular network communication is close to a frequency used for WIFI network communication. When a difference between the frequency used for the cellular network communication and the frequency used for the WIFI network communication is less than a preset value, interference exists.

S504: The electronic device receives, from the base station, information indicating a third frequency band.

S505: The electronic device changes to a cellular network in the third frequency band.

The electronic device may change to the cellular network in the third frequency band through handover, redirection, reestablishment, reselection, and the like. This is not limited herein.

In this way, when interference occurs between the cellular network and the WIFI network to which the electronic device is connected, the frequency band of the cellular network may be adjusted to reduce the interference between the cellular network and the WIFI network, and abnormal phenomena such as problems such as stuttering of a phone and network disconnection corresponding to a service corresponding to the cellular network or a service corresponding to the WIFI network are reduced.

Based on the foregoing embodiment, the electronic device changes to a cellular network in a fourth frequency band when the first frequency band and the second frequency band meet the first preset condition and the electronic device is in an idle state.

The electronic device changes to the cellular network in the fourth frequency band, and the cellular network in the fourth frequency band may be reselected for the electronic device.

In embodiments of this application, the fourth frequency band may be the same as or may be different from the third frequency band. In this way, when interference occurs between the cellular network and the WIFI network to which the electronic device is connected, the frequency band of the cellular network may be adjusted to reduce the interference between the cellular network and the WIFI network, and abnormal phenomena such as problems such as stuttering of a phone and network disconnection corresponding to a service corresponding to the cellular network or a service corresponding to the WIFI network are reduced.

Optionally, the first preset condition includes one or more of the following: the first frequency band overlaps with the second frequency band, a multiplied frequency or a beat frequency of the first frequency band is within the second frequency band, or a multiplied frequency or a beat frequency of the second frequency band is within the first frequency band.

Optionally, the transmitting, by the electronic device, an adjustment message to a base station when the first frequency band and the second frequency band meet a first preset condition and the electronic device is in a connected state includes: obtaining, by the electronic device, an interference frequency band between the first frequency band and the second frequency band when the first frequency band and the second frequency band meet the first preset condition, where the interference frequency band is a frequency band meeting the first preset condition in the first frequency band;
performing, by the electronic device when the electronic device is in the connected state and the interference frequency band meets a second preset condition, inter-frequency measurement and/or inter-system measurement, to obtain a measurement result, where the second preset condition includes not being a carrier aggregation secondary component carrier cell frequency band and not being a dual-connectivity secondary cell group frequency band; and
transmitting, by the electronic device, a first message to the base station when the measurement result meets a third preset condition, where the first message indicates to change a cell; or reducing, by the electronic device, a communication parameter corresponding to an interference bandwidth when the measurement result does not meet the third preset condition, where the communication parameter is a corresponding parameter when communication quality is measured, and the interference bandwidth is a bandwidth corresponding to the interference frequency band.

The third preset condition includes one or more of the following: an inter-frequency cell and/or an inter-system cell exists in the cellular network; the inter-frequency cell has no interference with the WIFI network, and/or the inter-system cell has no interference with the WIFI network; and a communication parameter corresponding to the inter-frequency cell meets a first threshold condition, and/or a communication parameter corresponding to the inter-system cell meets a second threshold condition, where the first threshold condition is a minimum requirement for communication of the electronic device in a first cellular system, and the second threshold condition is a minimum requirement for communication of the electronic device in a second cellular system.

For the inter-frequency cell and the inter-system cell, refer to the foregoing related descriptions. Details are not described herein again. In this way, the electronic device may change to a neighbor in a manner such as handover/redirection, to reduce the interference between the cellular network and the WIFI network. When the neighboring cell does not exist, or interference exists between the neighboring cell and the WIFI network, or the neighboring cell does not meet a communication condition, the communication parameter corresponding to the interference bandwidth is adjusted to reduce a possibility that the base station selects the interference bandwidth for a service and then selects a bandwidth without interference for the service, so that interference impact between the cellular network and the WIFI network is reduced, thereby improving user experience.

Optionally, the transmitting, by the electronic device, a first message to the base station when the measurement result meets a third preset condition includes: obtaining, by the electronic device, a related message about a fifth frequency band corresponding to the inter-frequency cell when the measurement result is that the inter-frequency cell exists in the cellular network; and transmitting, by the electronic device, a measurement report of a first type to the base station when the fifth frequency band and the second frequency band do not meet a fourth preset condition, and the fifth frequency band meets the first threshold condition, where the fourth preset condition is a condition indicating that interference exists between the fifth frequency band and the WIFI network, the measurement report of the first type indicates that the fifth frequency band meets a requirement of cellular communication, and the fifth frequency band includes the third frequency band; or
obtaining, by the electronic device, a related message about a sixth frequency band corresponding to the inter-system cell when the measurement result is that the inter-system cell exists in the cellular network; and transmitting, by the electronic device, a measurement report of a second type to the base station when the sixth frequency band and the second frequency band do not meet a fifth preset condition, and the sixth frequency band meets the second threshold condition, where the fifth preset condition is a condition indicating that interference exists between the sixth frequency band and the WIFI network, the measurement report of the second type indicates that the sixth frequency band meets the requirement of the cellular communication, and the sixth frequency band includes the third frequency band.

The related message about the fifth frequency band includes frequency point information and the like of the fifth frequency band corresponding to the inter-frequency cell. The related message about the sixth frequency band includes frequency point information and the like of the sixth frequency band corresponding to the inter-system cell. This is not limited herein.

In this way, when an inter-frequency cell without interference and meeting the communication condition exists, the cellular network may be adjusted to the inter-frequency cell, to reduce interference between cellular network communication and WIFI network communication, and reduce communication abnormal phenomena, thereby improving user experience. When an inter-system cell without interference and meeting the communication condition, the cellular network may be adjusted to the inter-system cell, to reduce the interference between the cellular network communication and the WIFI network communication, and reduce the communication abnormal phenomena, thereby improving the user experience.

Optionally, the reducing, by the electronic device, a communication parameter corresponding to an interference bandwidth when the measurement result does not meet the third preset condition includes: reducing, by the electronic device, the communication parameter corresponding to the interference bandwidth when the inter-frequency cell and the inter-system cell do not exist in the cellular network; or reducing, by the electronic device, the communication parameter corresponding to the interference bandwidth when the inter-frequency cell exists but the inter-system cell does not exist in the cellular network, and the inter-frequency cell has interference with the WIFI network; or reducing, by the electronic device, the communication parameter corresponding to the interference bandwidth when the inter-frequency cell does not exist but the inter-system cell exists in the cellular network, and the inter-system cell has interference with the WIFI network; or reducing, by the electronic device, the communication parameter corresponding to the interference bandwidth when the inter-frequency cell and the inter-system cell exist in the cellular network, the inter-frequency cell has interference with the WIFI network, and the inter-system cell has interference with the WIFI network; or
reducing, by the electronic device, the communication parameter corresponding to the interference bandwidth when the inter-frequency cell and the inter-system cell exist in the cellular network, the inter-frequency cell has no interference with the WIFI network, and the inter-system cell has interference with the WIFI network; or reducing, by the electronic device, the communication parameter corresponding to the interference bandwidth when the inter-frequency cell exists but the inter-system cell does not exist in the cellular network, the inter-frequency cell has no interference with the WIFI network, and the communication parameter corresponding to the inter-frequency cell does not meet the first threshold condition; or reducing, by the electronic device, the communication parameter corresponding to the interference bandwidth when the inter-frequency cell does not exist but the inter-system cell exists in the cellular network, the inter-system cell has no interference with the WIFI network, and the communication parameter corresponding to the inter-system cell does not meet the second threshold condition; or
reducing, by the electronic device, the communication parameter corresponding to the interference bandwidth when the inter-frequency cell and the inter-system cell exist in the cellular network, the inter-frequency cell has no interference with the WIFI network, the inter-system cell has interference with the WIFI network, and the communication parameter corresponding to the inter-frequency cell does not meet the first threshold condition; or reducing, by the electronic device, the communication parameter corresponding to the interference bandwidth when the inter-frequency cell and the inter-system cell exist in the cellular network, the inter-frequency cell has interference with the WIFI network, the inter-system cell has no interference with the WIFI network, and the communication parameter corresponding to the inter-system cell does not meet the second threshold condition; or reducing, by the electronic device, the communication parameter corresponding to the interference bandwidth when the inter-frequency cell and the inter-system cell exist in the cellular network, the inter-frequency cell has no interference with the WIFI network, the inter-system cell has no interference with the WIFI network, the communication parameter corresponding to the inter-frequency cell does not meet the first threshold condition, and the communication parameter corresponding to the inter-system cell does not meet the second threshold condition.

Optionally, the reducing, by the electronic device, a communication parameter corresponding to an interference bandwidth when the measurement result does not meet the third preset condition includes: reducing, by the electronic device, the communication parameter corresponding to the interference bandwidth when the measurement result does not meet the third preset condition and the interference bandwidth is greater than a first value, where the first value is a difference between a first bandwidth and a second bandwidth, the first bandwidth is a bandwidth corresponding to the first frequency band, and the second bandwidth is a bandwidth required for a service performed by the cellular network.

In this way, when the interference bandwidth is small, the communication parameter corresponding to the interference bandwidth is adjusted to reduce a probability that the base station and the electronic device perform a service in the interference bandwidth, and reduce interference between two networks in the electronic device.

Optionally, the communication parameter includes one or more of the following: a transmit power of a sounding reference signal SRS, and a measurement value of a channel quality indicator CQI; and the reducing, by the electronic device, the communication parameter corresponding to the interference bandwidth includes: adjusting, by the electronic device, the transmit power of the SRS corresponding to the interference bandwidth from a first power to a second power, where the second power is less than the first power; and/or adjusting, by the electronic device, the measurement value of the CQI corresponding to the interference bandwidth from a first measurement value to a second measurement value, where the second measurement value is less than the first measurement value.

In this way, the transmit power of the SRS signal corresponding to the interference bandwidth is reduced, thereby reducing the probability that the base station and the electronic device perform the service in the interference bandwidth, and reducing the interference between the two networks in the electronic device. The measurement value of the CQI corresponding to the interference bandwidth is reduced, thereby reducing the probability that the base station and the electronic device perform the service in the frequency band corresponding to the interference bandwidth, and reducing the interference between the two networks in the electronic device.

Optionally, the electronic device is preset with a first fallback value and/or a second fallback value; the second power meets that: the second power is equal to a difference between the first power and the first fallback value, and the first fallback value is in decibels; and the second measurement value meets that: the second measurement value is equal to a difference between the first measurement value and the second fallback value.

The first fallback value may correspond to an SRS power fallback bias; and the second fallback value may correspond to a CQI fallback bias.

Optionally, transmitting, by the electronic device, an adjustment message to a base station, the method further includes: canceling, by the electronic device, adjustment of the communication parameter.

In this way, the adjustment of the communication parameter is cleared, and impact of subsequent frequency band selection by the electronic device is reduced.

Optionally, the electronic device cancels adjustment of the communication parameter; and the electronic device adjusts the transmit power of the SRS corresponding to the interference bandwidth to the first power; and/or the electronic device adjusts the measurement value of the CQI corresponding to the interference bandwidth to the first measurement value.

In this way, setting of the SRS power and the measurement value setting of the CQI are cleared, to reduce impact of subsequent frequency band selection by the electronic device.

Optionally, before the performing, by the electronic device, inter-frequency measurement and/or inter-system measurement, the method further includes: uploading, by the electronic device, a virtual measurement report to the base station, where the virtual measurement report is for assisting the base station in generating configuration information, and the configuration information is information about a parameter required by the electronic device to perform inter-frequency measurement and/or information about a parameter required by the electronic device to perform inter-system measurement; receiving, by the electronic device, the configuration information from the base station; and performing, by the electronic device, inter-frequency measurement and/or inter-system measurement based on the configuration information.

The virtual measurement report may indicate that the first frequency band does not meet a requirement of cellular communication.

In this way, the electronic device may direct the base station to deliver information about a parameter required for neighboring cell measurement, and then perform inter-frequency measurement and/or inter-system measurement.

Optionally, the transmitting, by the electronic device, an adjustment message to a base station when the first frequency band and the second frequency band meet a first preset condition includes: obtaining, by the electronic device, an interference frequency band between the first frequency band and the second frequency band when the first frequency band and the second frequency band meet the first preset condition, where the interference frequency band is a frequency band meeting the first preset condition in the first frequency band; transmitting, by the electronic device, a second message to the base station when the electronic device is in the connected state and the interference frequency band meets a sixth preset condition, where the second message indicates to release the interference frequency band, and the sixth preset condition includes one or more of the following: the interference frequency band is a carrier aggregation secondary component carrier cell frequency band, and the interference frequency band is a dual-connectivity secondary cell group frequency band.

In this way, part of the interference frequency band can be released, and interference can be reduced.

Optionally, the changing, by the electronic device, to a cellular network in a fourth frequency band when the first frequency band and the second frequency band meet the first preset condition and the electronic device is in an idle state includes: obtaining, by the electronic device, an interference frequency band between the first frequency band and the second frequency band when the first frequency band and the second frequency band meet the first preset condition, where the interference frequency band is a frequency band meeting the first preset condition in the first frequency band; performing, by the electronic device when the electronic device is in the idle state and the interference frequency band meets a second preset condition, inter-frequency measurement and/or inter-system measurement, to obtain a measurement result, where the second preset condition includes not being a carrier aggregation secondary component carrier cell frequency band and not being a dual-connectivity secondary cell group frequency band; and changing, by the electronic device, to the cellular network in the fourth frequency band when the measurement result meets a third preset condition.

The third preset condition includes one or more of the following: an inter-frequency cell and/or an inter-system cell exists in the cellular network; the inter-frequency cell has no interference with the WIFI network, and/or the inter-system cell has no interference with the WIFI network; and a communication parameter corresponding to the inter-frequency cell meets a first threshold condition, and/or a communication parameter corresponding to the inter-system cell meets a second threshold condition, where the first threshold condition is a minimum requirement for communication of the electronic device in a first cellular system, and the second threshold condition is a minimum requirement for communication of the electronic device in a second cellular system.

In this way, when the electronic device is in the idle state, the electronic device may change to a neighboring cell by reselection or the like, to reduce interference between the cellular network and the WIFI network.

The electronic device may also adjust a frequency band corresponding to the WIFI network, to avoid interference. Details are not described herein again.

It should be noted that in embodiments of this application, "when ... " may be an instantaneous occurrence time of a case, or may be a period of time after occurrence of a case. This is not specifically limited in embodiments of this application.

The cellular network communication method in embodiments of this application has been described above. An apparatus for performing the foregoing cellular network communication provided in embodiments of this application is described below. A person skilled in the art may understand that, the method and the apparatus may be combined and referred to each other, and a related apparatus provided in embodiments of this application may perform the steps in the foregoing cellular network communication.

As shown in FIG. 6, FIG. 6 is a schematic structural diagram of a cellular network communication apparatus according to an embodiment of this application. The cellular network communication apparatus may be a terminal device in embodiments of this application, or may be a chip or a chip system in the terminal device.

As shown in FIG. 6, a cellular network communication apparatus 2100 may be used in a communication device, a circuit, a hardware component, or a chip. The cellular network communication apparatus includes: a communication unit 2101, and a processing unit 2102. The communication unit 2101 is configured to support the cellular network communication apparatus 2100 to perform a step of transmitting data and receiving data. The communication unit 2103 may be an input/output interface, a pin, a circuit, or the like. The processing unit 2102 is configured to support the cellular network communication apparatus 2100 to perform a step of information processing.

In a possible implementation, the cellular network communication apparatus 2100 may further include a display unit 2103. The display unit 2103 is configured to perform display.

In a possible embodiment, the cellular network communication apparatus may further include: a storage unit 2104. The processing unit 2102 is connected to the storage unit 2104 through a bus. The storage unit 2104 may include one or more memories, and the memory may be one or more devices or components in a circuit that are used to store a program or data. The storage unit 2104 may exist independently, and is connected to the processing unit 2102 included by the cellular network communication apparatus by using a communication line. The storage unit 2104 may alternatively be integrated with the processing unit 2102.

The storage unit 2104 may store computer-executable instructions of the method of the terminal device, so that the processing unit 2102 performs the method in the foregoing embodiments. The storage unit 2104 may be a register, a cache, a RAM, or the like, and the storage unit 2104 may be integrated with the processing unit 2102. The storage unit 2104 may be a read-only memory (read-only memory, ROM) or another type of static storage device that may store static information and instructions, and the storage unit 2104 may be independent of the processing unit 2102.

The cellular network communication method provided in embodiments of this application may be applied to an electronic device having a display function. the electronic device includes a terminal device. For a specific device form and the like of the terminal device, refer to the foregoing related descriptions. Details are not described herein again.

An embodiment of this application provides an electronic device. The electronic device includes: a processor and a memory, where the memory stores computer-executable instructions; and The processor executes the computer-executable instructions stored in the memory, so that the electronic device performs the foregoing method.

An embodiment of this application provides a chip. The chip includes a processor, and the processor is configured to call a computer program in a memory to perform the technical solutions in the foregoing embodiments. Their implementation principles and technical effects are similar those in the related embodiments, and details are not described herein again.

An embodiment of this application further provides a computer-readable storage medium. The computer-readable storage medium stores a computer program. When the computer program is executed by a processor, the foregoing method is implemented. All or some of methods in the foregoing embodiments may be implemented by using software, hardware, firmware, or any combination thereof. If implemented in software, a function may be stored on or transmitted on a computer-readable medium as one or more instructions or code. The computer-readable medium may include a computer storage medium and a communication medium, and may further include any medium that can transmit a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. Furthermore, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer-readable medium.

An embodiment of this application provides a computer program product. The computer program product includes a computer program. The computer program, when run, causes a computer to perform the foregoing method.

Embodiments of this application are described with reference to the flowcharts and/or block diagrams of the method, the device (system), and the computer program product according to embodiments of this application. It is to be understood that, computer program instructions can implement each procedure and/or block in the flowcharts and/or block diagrams, and a combination of procedures and/or blocks in the flowcharts and/or block diagrams. These computer program instructions may be provided for a general-purpose computer, a dedicated computer, an embedded processor, or a processing unit of any other programmable data processing device to generate a machine, so that the instructions executed by a computer or a processing unit of any other programmable data processing device generate an apparatus for implementing a specific function in one or more processes in the flowcharts and/or in one or more blocks in the block diagrams.

It should be noted that the user information (including, but not limited to, user equipment information, user personal information, and the like) and data (including, but not limited to, data for analysis, stored data, displayed data, and the like) involved in this application all are information and data authorized by the user or fully authorized by each party. The collection, use, and processing of relevant data need to comply with relevant laws and regulations, and corresponding operation portals are provided for the user to choose to authorize or refuse.

The foregoing specific implementations further describe the objectives, technical solutions in detail, and beneficial effects of the present invention. It should be appreciated that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A cellular network communication method, comprising:
accessing, by an electronic device, a cellular network and a wireless fidelity WIFI network;
obtaining, by the electronic device, a first frequency band corresponding to the cellular network and a second frequency band corresponding to the WIFI network;
transmitting, by the electronic device, an adjustment message to a base station when the first frequency band and the second frequency band meet a first preset condition and the electronic device is in a connected state, wherein the adjustment message indicates to adjust a frequency band corresponding to the cellular network, and the first preset condition is a condition indicating that interference exists between the cellular network and the WIFI network;
receiving, by the electronic device from the base station, information indicating a third frequency band; and
changing, by the electronic device, to a cellular network in the third frequency band; or
changing, by the electronic device, to a cellular network in a fourth frequency band when the first frequency band and the second frequency band meet the first preset condition and the electronic device is in an idle state.

2. The method according to claim 1, wherein the first preset condition comprises one or more of the following:
the first frequency band overlaps with the second frequency band, a multiplied frequency or a beat frequency of the first frequency band is within the second frequency band, or a multiplied frequency or a beat frequency of the second frequency band is within the first frequency band.

3. The method according to claim 1 or 2, wherein the transmitting, by the electronic device, an adjustment message to a base station when the first frequency band and the second frequency band meet a first preset condition and the electronic device is in a connected state comprises:
obtaining, by the electronic device, an interference frequency band between the first frequency band and the second frequency band when the first frequency band and the second frequency band meet the first preset condition, wherein the interference frequency band is a frequency band meeting the first preset condition in the first frequency band;
performing, by the electronic device when the electronic device is in the connected state and the interference frequency band meets a second preset condition, inter-frequency measurement and/or inter-system measurement, to obtain a measurement result, wherein the second preset condition comprises not being a carrier aggregation secondary component carrier cell frequency band and not being a dual-connectivity secondary cell group frequency band; and
transmitting, by the electronic device, a first message to the base station when the measurement result meets a third preset condition, wherein the first message indicates to change a cell;
the third preset condition comprises one or more of the following: an inter-frequency cell and/or an inter-system cell exists in the cellular network; the inter-frequency cell has no interference with the WIFI network, and/or the inter-system cell has no interference with the WIFI network; and a communication parameter corresponding to the inter-frequency cell meets a first threshold condition, and/or a communication parameter corresponding to the inter-system cell meets a second threshold condition, wherein the first threshold condition is a minimum requirement for communication of the electronic device in a first cellular system, and the second threshold condition is a minimum requirement for communication of the electronic device in a second cellular system; or
reducing, by the electronic device, a communication parameter corresponding to an interference bandwidth when the measurement result does not meet the third preset condition, wherein the communication parameter is a corresponding parameter when communication quality is measured, and the interference bandwidth is a bandwidth corresponding to the interference frequency band.

4. The method according to claim 3, wherein the transmitting, by the electronic device, a first message to the base station when the measurement result meets a third preset condition comprises:
obtaining, by the electronic device, related information about a fifth frequency band corresponding to the inter-frequency cell when the measurement result is that the inter-frequency cell exists in the cellular network; and
transmitting, by the electronic device, a measurement report of a first type to the base station when the fifth frequency band and the second frequency band do not meet a fourth preset condition, and the fifth frequency band meets the first threshold condition, wherein
the fourth preset condition is a condition indicating that interference exists between the fifth frequency band and the WIFI network, the measurement report of the first type indicates that the fifth frequency band meets a requirement of cellular communication, and the fifth frequency band comprises the third frequency band; or
obtaining, by the electronic device, related information about a sixth frequency band corresponding to the inter-system cell when the measurement result is that the inter-system cell exists in the cellular network; and
transmitting, by the electronic device, a measurement report of a second type to the base station when the sixth frequency band and the second frequency band do not meet a fifth preset condition, and the sixth frequency band meets the second threshold condition, wherein
the fifth preset condition is a condition indicating that interference exists between the sixth frequency band and the WIFI network, the measurement report of the second type indicates that the sixth frequency band meets the requirement of the cellular communication, and the sixth frequency band comprises the third frequency band.

5. The method according to claim 3 or 4, wherein the reducing, by the electronic device, a communication parameter corresponding to an interference bandwidth when the measurement result does not meet the third preset condition comprises:
reducing, by the electronic device, the communication parameter corresponding to the interference bandwidth when the inter-frequency cell and the inter-system cell do not exist in the cellular network; or
reducing, by the electronic device, the communication parameter corresponding to the interference bandwidth when the inter-frequency cell exists but the inter-system cell does not exist in the cellular network, and the inter-frequency cell has interference with the WIFI network; or
reducing, by the electronic device, the communication parameter corresponding to the interference bandwidth when the inter-frequency cell does not exist but the inter-system cell exists in the cellular network, and the inter-system cell has interference with the WIFI network; or
reducing, by the electronic device, the communication parameter corresponding to the interference bandwidth when the inter-frequency cell and the inter-system cell exist in the cellular network, the inter-frequency cell has interference with the WIFI network, and the inter-system cell has interference with the WIFI network; or
reducing, by the electronic device, the communication parameter corresponding to the interference bandwidth when the inter-frequency cell and the inter-system cell exist in the cellular network, the inter-frequency cell has no interference with the WIFI network, and the inter-system cell has interference with the WIFI network; or
reducing, by the electronic device, the communication parameter corresponding to the interference bandwidth when the inter-frequency cell exists but the inter-system cell does not exist in the cellular network, the inter-frequency cell has no interference with the WIFI network, and the communication parameter corresponding to the inter-frequency cell does not meet the first threshold condition; or
reducing, by the electronic device, the communication parameter corresponding to the interference bandwidth when the inter-frequency cell does not exist but the inter-system cell exists in the cellular network, the inter-system cell has no interference with the WIFI network, and the communication parameter corresponding to the inter-system cell does not meet the second threshold condition; or
reducing, by the electronic device, the communication parameter corresponding to the interference bandwidth when the inter-frequency cell and the inter-system cell exist in the cellular network, the inter-frequency cell has no interference with the WIFI network, the inter-system cell has interference with the WIFI network, and the communication parameter corresponding to the inter-frequency cell does not meet the first threshold condition; or
reducing, by the electronic device, the communication parameter corresponding to the interference bandwidth when the inter-frequency cell and the inter-system cell exist in the cellular network, the inter-frequency cell has interference with the WIFI network, the inter-system cell has no interference with the WIFI network, and the communication parameter corresponding to the inter-system cell does not meet the second threshold condition; or
reducing, by the electronic device, the communication parameter corresponding to the interference bandwidth when the inter-frequency cell and the inter-system cell exist in the cellular network, the inter-frequency cell has no interference with the WIFI network, the inter-system cell has no interference with the WIFI network, the communication parameter corresponding to the inter-frequency cell does not meet the first threshold condition, and the communication parameter corresponding to the inter-system cell does not meet the second threshold condition.

6. The method according to any one of claims 3 to 5, wherein the reducing, by the electronic device, a communication parameter corresponding to an interference bandwidth when the measurement result does not meet the third preset condition comprises:
reducing, by the electronic device, the communication parameter corresponding to the interference bandwidth when the measurement result does not meet the third preset condition and the interference bandwidth is greater than a first value, wherein the first value is a difference between a first bandwidth and a second bandwidth, the first bandwidth is a bandwidth corresponding to the first frequency band, and the second bandwidth is a bandwidth required for a service performed by the cellular network.

7. The method according to any one of claims 3 to 6, wherein the communication parameter comprises one or more of the following: a transmit power of a sounding reference signal SRS, and a measurement value of a channel quality indicator CQI; and
the reducing, by the electronic device, the communication parameter corresponding to the interference bandwidth comprises:
adjusting, by the electronic device, the transmit power of the SRS corresponding to the interference bandwidth from a first power to a second power, wherein the second power is less than the first power; and/or
adjusting, by the electronic device, the measurement value of the CQI corresponding to the interference bandwidth from a first measurement value to a second measurement value, wherein the second measurement value is less than the first measurement value.

8. The method according to claim 7, wherein the electronic device is preset with a first fallback value and/or a second fallback value;
the second power meets that: the second power is equal to a difference between the first power and the first fallback value, and the first fallback value is in decibels; and
the second measurement value meets that: the second measurement value is equal to a difference between the first measurement value and the second fallback value.

9. The method according to any one of claims 3 to 8, wherein after the transmitting, by the electronic device, an adjustment message to a base station, the method further comprises:
canceling, by the electronic device, adjustment of the communication parameter.

10. The method according to claim 8, wherein the electronic device cancels adjustment of the communication parameter; and
the electronic device adjusts the transmit power of the SRS corresponding to the interference bandwidth to the first power; and/or
the electronic device adjusts the measurement value of the CQI corresponding to the interference bandwidth to the first measurement value.

11. The method according to any one of claims 3 to 10, wherein before the performing, by the electronic device, inter-frequency measurement and/or inter-system measurement, the method further comprises:
uploading, by the electronic device, a virtual measurement report to the base station, wherein the virtual measurement report is for assisting the base station in generating configuration information, and the configuration information is information about a parameter required by the electronic device to perform inter-frequency measurement and/or information about a parameter required by the electronic device to perform inter-system measurement;
receiving, by the electronic device, the configuration information from the base station; and
performing, by the electronic device, inter-frequency measurement and/or inter-system measurement based on the configuration information.

12. The method according to claim 1 or 2, wherein the transmitting, by the electronic device, an adjustment message to a base station when the first frequency band and the second frequency band meet a first preset condition comprises:
obtaining, by the electronic device, an interference frequency band between the first frequency band and the second frequency band when the first frequency band and the second frequency band meet the first preset condition, wherein the interference frequency band is a frequency band meeting the first preset condition in the first frequency band; and
transmitting, by the electronic device, a second message to the base station when the electronic device is in the connected state and the interference frequency band meets a sixth preset condition, wherein the second message indicates to release the interference frequency band, and the sixth preset condition comprises one or more of the following: the interference frequency band is a carrier aggregation secondary component carrier cell frequency band, and the interference frequency band is a dual-connectivity secondary cell group frequency band.

13. The method according to claim 1 or 2, wherein the changing, by the electronic device, to a cellular network in a fourth frequency band when the first frequency band and the second frequency band meet the first preset condition and the electronic device is in an idle state comprises:
obtaining, by the electronic device, an interference frequency band between the first frequency band and the second frequency band when the first frequency band and the second frequency band meet the first preset condition, wherein the interference frequency band is a frequency band meeting the first preset condition in the first frequency band;
performing, by the electronic device when the electronic device is in the idle state and the interference frequency band meets a second preset condition, inter-frequency measurement and/or inter-system measurement, to obtain a measurement result, wherein the second preset condition comprises not being a carrier aggregation secondary component carrier cell frequency band and not being a dual-connectivity secondary cell group frequency band; and
changing, by the electronic device, to the cellular network in the fourth frequency band when the measurement result meets a third preset condition, wherein
the third preset condition comprises one or more of the following: an inter-frequency cell and/or an inter-system cell exists in the cellular network; the inter-frequency cell has no interference with the WIFI network, and/or the inter-system cell has no interference with the WIFI network; and a communication parameter corresponding to the inter-frequency cell meets a first threshold condition, and/or a communication parameter corresponding to the inter-system cell meets a second threshold condition, wherein the first threshold condition is a minimum requirement for communication of the electronic device in a first cellular system, and the second threshold condition is a minimum requirement for communication of the electronic device in a second cellular system.

14. An electronic device, comprising: a processor and a memory, wherein
the memory is configured to store computer-executable instructions; and
the processor executes the computer-executable instructions stored in the memory, to cause the electronic device to perform the method according to any one of claims 1 to 13.

15. A computer-readable storage medium, storing a computer program, wherein when the computer program is executed by a processor, the method according to any one of claims 1 to 13 is implemented.

16. A computer program product, comprising a computer program, the computer program, when run, causing a computer to perform the method according to any one of claims 1 to 13.
